# EUROPEAN PATENT APPLICATION

(11) **EP 2 083 241 A2**
(43) Date of publication of application: **29.07.2009**
(21) Application number: 09151118.8
(22) Date of filing: 22.01.2009
(51) Int. Cl.: G01B 3/02, G01B 3/04

(54) **Positioning scale device**

(30) Priority: 24.01.2008 TW 97201554 U; 09.09.2008 TW 97216287 U
(71) Applicant: Chou, Feng-Hsiang, ChungCheng Taipei City (TW)
(72) Inventor: Chou, Feng-Hsiang, ChungCheng Taipei City (TW)
(74) Representative: Viering, Jentschura & Partner

(57) **Abstract**

A positioning scale device includes a main scale body (1), a stationary positioning portion (2), at least a moving positioning portion (3), and at least a direction indicating portion (4). The main scale body (1) has at least a guiding slot (11); the stationary positioning portion (2) being positioned on the main scale body (1) is adjacent to an end of the guiding slot (11); the moving positioning portion (3) being positioned in the guiding slot (11) is capable of fixing at a location of the guiding slot (11); while the direction indicating portion (4) being positioned on the main scale body (1) forms a predetermined angle with respect to the extended direction of the guiding slot (11). By the use of the direction indicating portions (4), one is capable of assuring relationship between the "object to be measured" and the horizontal direction. Therefore, the positioning scale device of the invention is capable of achieving the efficacy of duplicating the same status as that of the "object to be measured".

## Description

### BACKGROUND OF THE INVENTION

### 1. Field of the Invention

The invention relates to a positioning scale device, and more particularly, to a positioning scale device that is capable of marking and duplicating the status of the objects to be measured as well as measuring the included angle between the two objects.

### 2. Description of the Prior Art

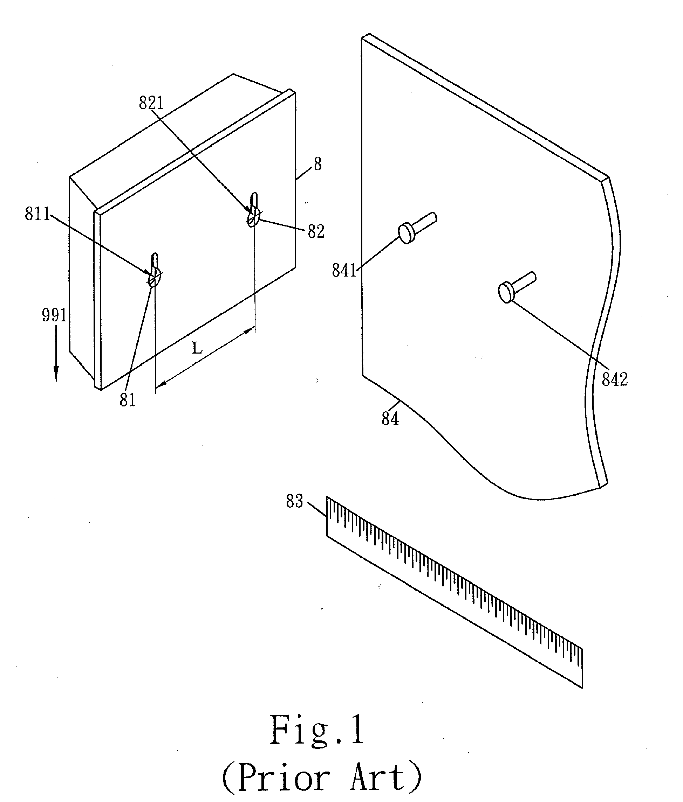

FIG. 1 is an isometric-and-schematic view showing the structure of the embodiment of performing the duplicating and positioning work by the use of the measuring tool of the prior art. It is the intention to hang an object (8) to a wall (84). As shown in FIG. 1, the object (8) to be loaded includes a first bearing hole (81) having a first center point (811) and a second bearing hole (82) having a second center point (821), and the distance between the first center point (811) and the second center point (821) is L. When it comes to place the "object (9) to be loaded" on the wall (84), firstly, one needs to measure the distance length "L" between the first center point (811) and the second center point (821) by the use of a measuring tool (83). Secondly, one provides a first positioning member (841) on the wall (84). Thirdly, one provides a second positioning member (842) after marking the length "L" by the use of the measuring tool (83). In this way, by having the first bearing hole (81) contain the second positioning member (842) and having the second bearing hole (82) contain the first positioning member (841), one is capable of hanging the "object (8) to be loaded" on the wall (84).

But it often happen that it is unable to position the first center point (811) and the second center point (821) definitely by using the measuring tool (83) that results in the length measured is inaccurate because the positioning work for the first bearing hole (81) and second bearing hole (82) can be affected by rattling around in the holes themselves. What is more, one often needs to have the direction of the connecting line between the first center point (811) and the second center point (821) perpendicular to the gravitational direction (991) and this method is not easy to make a proper judgment. As a result, it is quite possible that the object (8) to be hung on the wall (84) become tilted. Moreover, once there is a need that the direction that the direction of the connecting line between the first center point (811) and the second center point (821) forms an inclined angle other than 90 degrees, it is quite impossible to accomplish by the use of the above-mentioned method. All of this situations will cause troubles for the construction worker.

### SUMMARY OF THE INVENTION

In light of the disadvantages of the prior arts, the invention provides a positioning scale device that aims to ameliorate at least some of the disadvantages of the prior art or to provide a useful alternative.

The primary objective of the invention is to provide a positioning scale device that is capable of assuring the relationship between the "object to be measured" and the horizontal direction to achieve the efficacy of duplicating the same status as that of the "object to be measured".

It is another objective of the invention to provide a positioning scale device that is capable of achieving the efficacy of more precisely assuring the status of various objects to be measured by the relative position of the main scale body and auxiliary scale body through a auxiliary scale body connected to the main scale body.

It is further objective of the invention to provide a positioning scale device that is capable of achieving the efficacy of measuring the included angle "θ" between the two "objects to be measured" through an angle calculating body provided between the main scale body and the auxiliary scale body.

To attain the above-mentioned objectives, the invention provides a positioning scale device that includes a main scale body, a stationary positioning portion, at least a moving positioning portion, and at least a direction indicating portion. The main scale body has at least a guiding slot; the stationary positioning portion being positioned on the main scale body is adjacent to an end of the guiding slot; the moving positioning portion being positioned in the guiding slot is capable of fixing at a location of the guiding slot; while the direction indicating portion being positioned on the main scale body forms a predetermined angle with respect to the extended direction of the guiding slot. By the use of the direction indicating portions, one is capable of assuring relationship between the "object to be measured" and the horizontal direction. Therefore, the positioning scale device of the invention is capable of achieving the efficacy of duplicating the same status as that of the "object to be measured".

To attain the above-mentioned objectives, the invention provides another preferred embodiment of positioning scale device that includes a auxiliary scale body and an angle calculating body. The auxiliary scale body is connected to the main scale body by a stationary positioning portion. By performing the relative rotating motion between the auxiliary scale body and the main scale body with respect to the stationary positioning portion, an included angle "θ" is formed between the auxiliary scale body and the main scale body, and the value of the included angle "θ" is displayed by the angle calculating body.

By comparing with the prior art, the positioning scale device of the invention is capable of assuring the relationship between the "object to be measured" and the horizontal direction through the direction indicating portion provided on the main scale body. In this way, the positioning scale device of the invention is capable of achieving the efficacy of duplicating the same status as that of the "object to be measured". Through the auxiliary scale body connected to the main scale body, one is capable of achieving the efficacy of assuring the status of various objects to be measured. Moreover, the positioning scale device of the invention is capable of achieving the efficacy of measuring the included angle "θ" between the two "objects to be measured" through an angle calculating body provided between the main scale body and the auxiliary scale body.

### BRIEF DESCRIPTION OF THE DRAWINGS

The accomplishment of this and other objectives of the invention will become apparent from following description and its accompanying drawings of which:
- FIG. 1: is an isometric-and-schematic view showing the structure of the embodiment of performing the duplicating and positioning work by the use of the measuring tool of the prior art;
- FIG. 2A: is an isometric-and-schematic view showing the structure of the positioning scale device of the first embodiment of the invention.
- FIG. 2B: is an isometric-and-schematic view showing the status of using the positioning scale device of the first embodiment of the invention.
- FIG. 3A: is an isometric-and-schematic view showing the structure of the positioning scale device of the second embodiment of the invention.
- FIG. 3B: is an isometric-and-schematic view showing the status of using the positioning scale device of the second embodiment of the invention.
- FIG. 4A: is an isometric-and-schematic view showing the structure of the positioning scale device of the third embodiment of the invention.
- FIG. 4B: is an elevation view showing the assembled structure of the positioning scale device of the third embodiment of the invention.
- FIG. 5A: is a schematic top view showing the first action of the status of using the positioning scale device to perform the duplicating and positioning work of the third embodiment of the invention.
- FIG. 5B: is a schematic top view showing the second action of the status of using the positioning scale device to perform the duplicating and positioning work of the third embodiment of the invention.
- FIG. 6: is a schematic top view showing the status of using the positioning scale device to measure the inclined angle of an object to be measured of the third embodiment of the invention.

### DETAILED DESCRIPTION OF THE PREFERRED EMBODIMENT

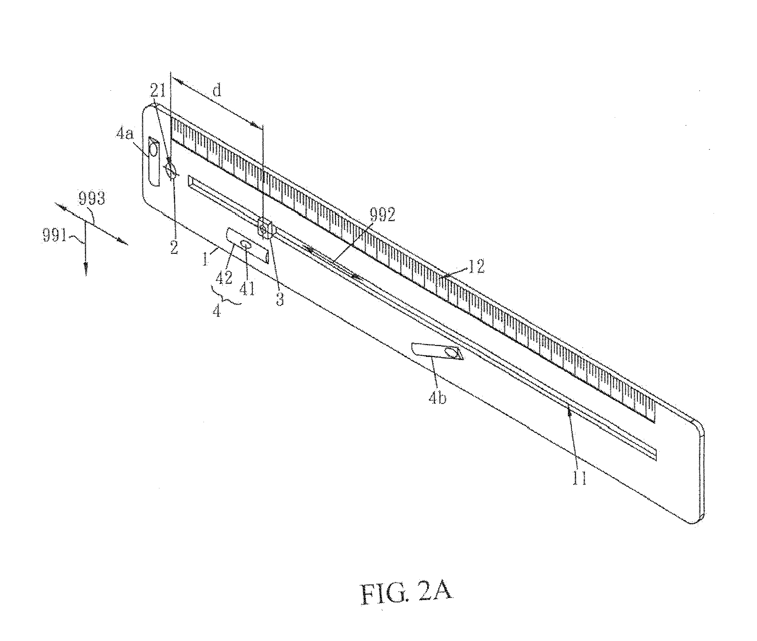

FIG. 2A is an isometric-and-schematic view showing the structure of the positioning scale device of the first embodiment of the invention. As shown in FIG. 2A, the positioning scale device of the invention includes a main scale body (1), a stationary positioning portion (2), at least a moving positioning portion (3), and at least a direction indicating portion (4). The main scale body (1) has at least a guiding slot (11) and a length's dimension graduation (12) that is capable of measuring and displaying the length value between two objects.

The stationary positioning portion (2) being a penetrating hole is located on the main scale body (1) and adjacent to an end of the guiding slot (11) with its central point aligned with the starting point of the length's dimension graduation (12) and is on the center line of the guiding slot (11).

The moving positioning portion (3) being located in the guiding slot (11) has a perforation (31) making both the front side and the back side of the moving positioning portion (3) communicate each other. Moreover, the moving positioning portion (3) is capable of performing a linear displacing movement (992) in horizontal direction along the guiding slot (11), fixing at any location along the guiding slot (11), and displaying a distance "d" between stationary positioning portion (2) and the moving positioning portion (3).

The direction indicating portion (4) having a liquid (42) and an air bubble (41) contained therein is capable of showing a horizontal direction (993) that is perpendicular to a gravitational direction (991). Moreover, the direction indicating portion (4) being located on the main scale body (1) appears a predetermined angle with respect to the horizontal direction (993) along the guiding slot (11). A 0 degree of the predetermined angle will make the air bubble (41) position at the center of the direction indicating portion (4) for assuring that the guiding slot (11) is in horizontal direction (993). In the preferred embodiment of the invention, the direction indicating portion (4a) is a indication of vertical direction if the direction indicating portion (4) appears 90 degrees with respect to the guiding slot (11). Certainly, the direction indicating portion (4a) is a indication of a special angle if the direction indicating portion (4) appears 45 degrees with respect to the guiding slot (11).

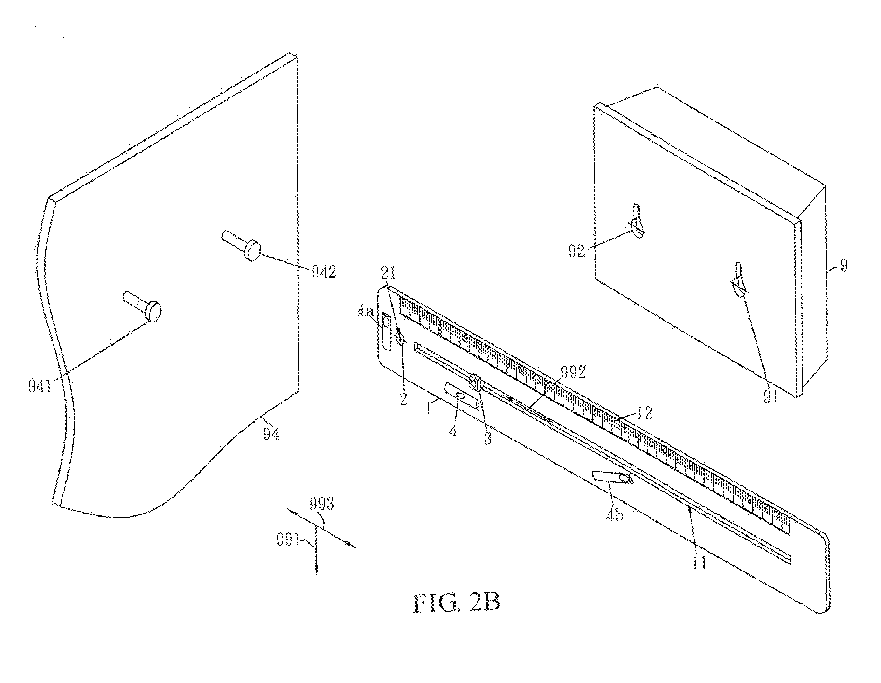

FIG. 2B is an isometric-and-schematic view showing the status of using the positioning scale device of the first embodiment of the invention. As shown in FIG. 2B, an object (9) to be loaded has a first bearing hole (91) and a second bearing hole (92). When it comes to hanging an object (9) on a wall (94), first of all, the main scale body (1) of the positioning scale device of the invention is pressed against the object (9) to be loaded, then the stationary positioning portion (2) is aligned with the first bearing hole (91). Afterwards, the moving positioning portion (3) is performed the linear displacing movement (992) in horizontal direction along the guiding slot (11) toward the location of the second bearing hole (92) and is secured thereat. The main scale body (1) is then removed from the object (9) to be loaded and is pressed against the wall (94) to form a mark or to secure directly on the wall (94) by the use of a first positioning member (941). After making sure that the direction indicating portion (4) indicates that the guiding slot (11) is parallel to the horizontal direction (993), a second positioning member (942) is to form a mark or to secure directly on the wall (94) through the moving positioning portion (3). In the present preferred embodiment, since the first positioning member (941) and the second positioning member (942) are steel nails, one is capable of forming marks beforehand by the use of their distal portions to facilitate hanging and securing the positioning members of the other structures on the wall (94) by making use of the formed marks as centers. In this way, one can assure that the connecting line between the first positioning member (941) and the second positioning member (942) is in the horizontal direction (993). Moreover, one can also assure that the distance between the first positioning member (941) and the second positioning member (942) is the same as the distance between first bearing hole (91) and the second bearing hole (92).

In the following other embodiments of the invention, since most of the elements are similar or the same as those of the above-mentioned embodiment, same elements will be denoted by the same names and the same numerals while similar elements will be used the same name and denoted by adding an alphabet to the original numeral for differentiation.

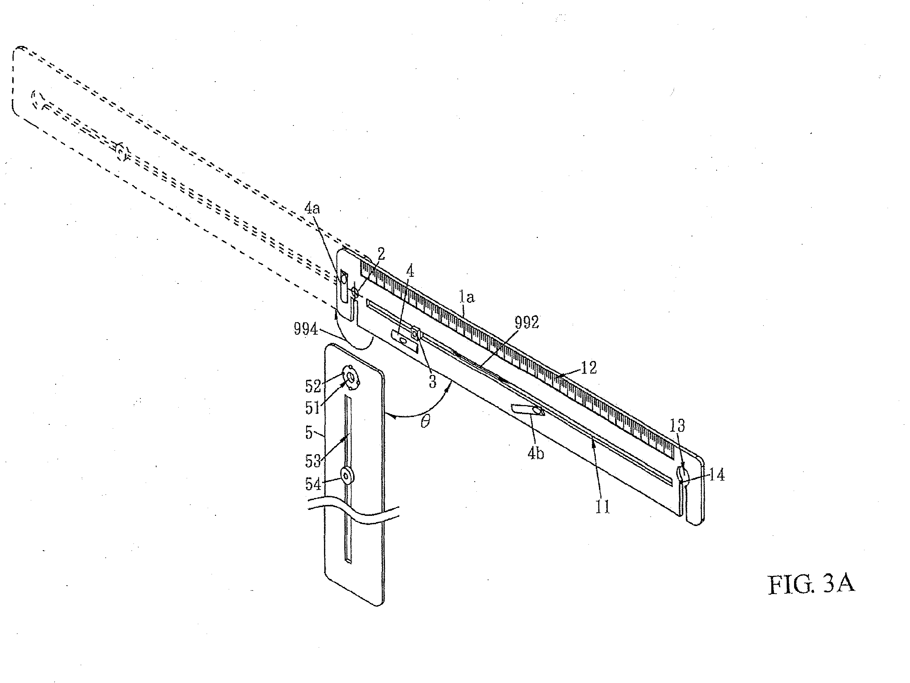

FIG. 3A is an isometric-and-schematic view showing the structure of the positioning scale device of the second embodiment of the invention. As shown in FIG. 3A, the positioning scale device of the invention includes a main scale body (1a), a stationary positioning portion (2), at least moving positioning portion (3), at least a direction indicating portion (4), and an auxiliary scale body (5). Among them, the stationary positioning portion (2), the moving positioning portion (3), and the direction indicating portion (4) are the same as those of the above-mentioned embodiment, thereby it is unnecessary to mention here. What is different in the present embodiment is that the stationary positioning portion (2) is also connected to the auxiliary scale body (5) that is capable of connecting to the stationary positioning portion (2) through a buckling portion (51) which has a multiplicity of protuberances (52) for securing the auxiliary scale body (5) to the main scale body (1a). The auxiliary scale body (5) is capable of performing a rotating action with respect to the stationary positioning portion (2) by using the stationary positioning portion (2) as a pivot point making an included angle "0" between the auxiliary scale body (5) and the main scale body (1a) where the θ can be one of a particular value of 0, 45, 90, and 180 degrees. In the case of a particular angle value of 180 degree, the positioning scale device of the invention is capable of adapting to measure an extended length (relatively longer object) of the object to be measured.

In the present embodiment, the auxiliary scale body (5) also has a second guiding slot (53) and a second moving positioning portion (54) that is located in the second guiding slot (53) and is capable of fixing at a location their on. The main scale body (1a) has a guiding-and-securing slot (13), and the second moving positioning portion (54) is capable of being positioned at a predetermined location (an end of the second guiding slot (53)) and in the guiding-and-securing slot (13) to make the main scale body (1a) overlap with the auxiliary scale body (5) and make the second moving positioning portion (54) secure in the guiding-and-securing slot (13) by at least a salient block (14).

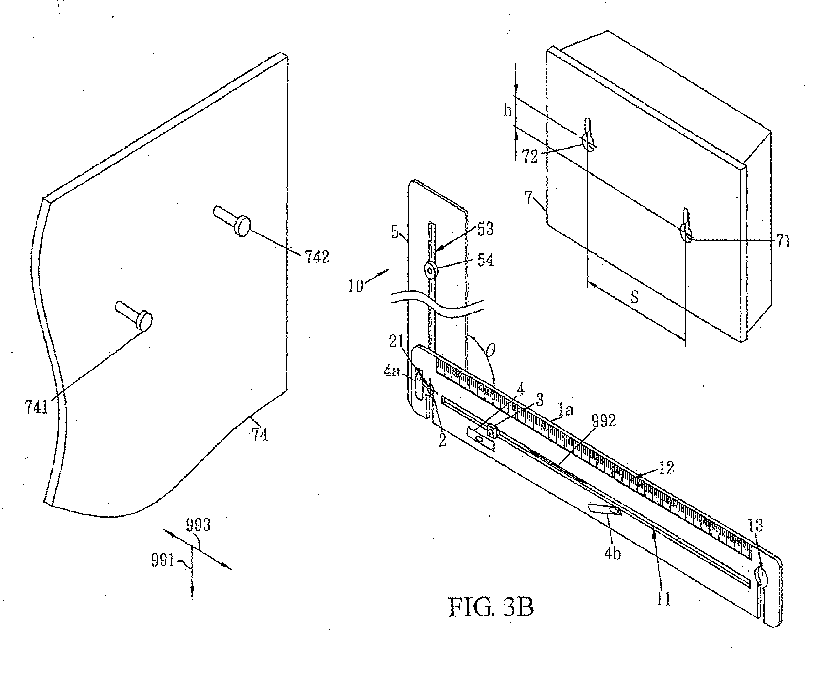

FIG. 3B is an isometric-and-schematic view showing the status of using the positioning scale device of the second embodiment of the invention. As shown in FIG. 3B, an "object (7) to be loaded" provided by the second embodiment of the invention has a first bearing hole (71) and a second bearing hole (72) that are having a space "s" between them in horizontal direction and a space "h" in vertical direction (gravitational direction 991). When it comes to place an "object (7) to be loaded" on the wall (74), first of all, the main scale body (1a) of the positioning scale device of the invention is formed an angle θ of 90 degree with respect to the auxiliary scale body (5), then the positioning scale device is pressed against the "object (7) to be loaded". Afterwards, the moving positioning portion (3) is placed on the first bearing hole (71) and the second moving positioning portion (54) is placed on the second bearing hole (72). By observing the direction indicating portion (4), after the stationary positioning portion (2) is adjusted to have its connecting line to the moving positioning portion (3) in the horizontal direction (993), then the moving positioning portion (3) and the second moving positioning portion (54) can be secured in position. Afterwards, a first side surface (10) (front surface) of the positioning scale device of the invention is pressed against the wall (74) while the other side (back side) is used to perform positioning work. At this moment, the stationary positioning portion (2) is secured first. By observing the direction indicating portion (4), after the main scale body (1a) is adjusted to be in horizontal direction (993), the first bearing hole (71) and the second bearing hole (72) of "object (7) to be loaded" is then connected to the first positioning member (741) and the second positioning member (742) of the wall (74) through the moving positioning portion (3) and the second moving positioning portion (54).

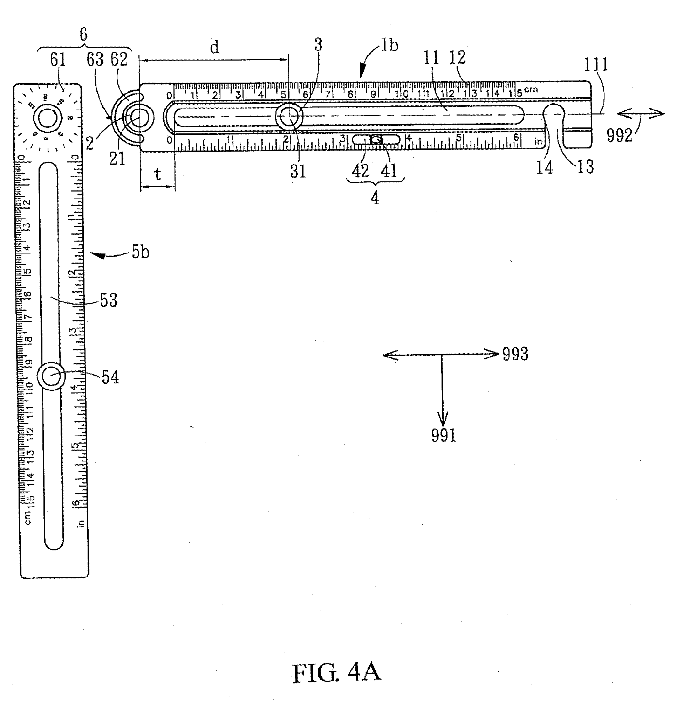

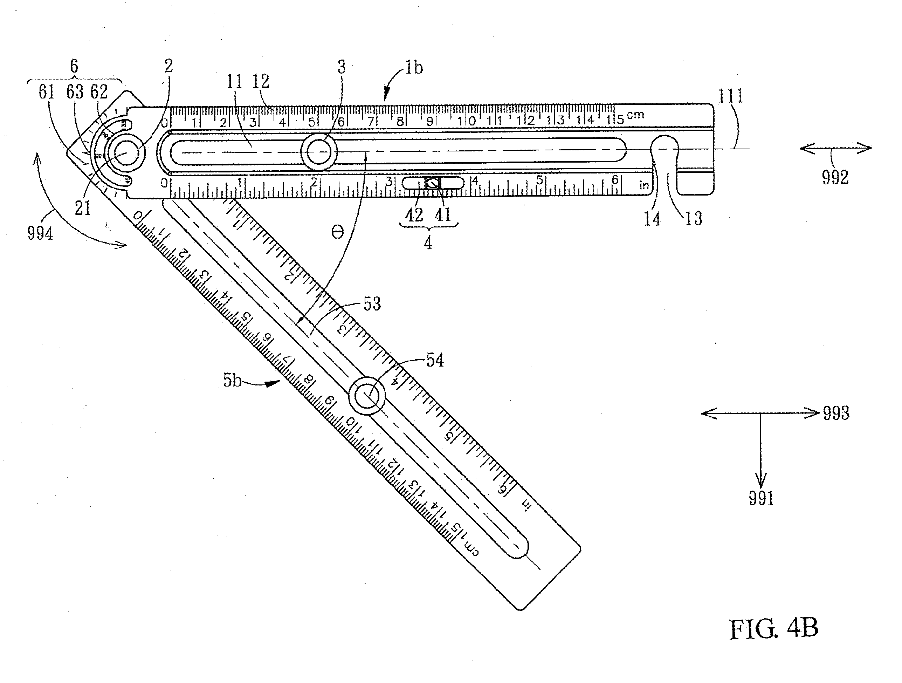

FIG. 4A is an isometric-and-schematic view showing the structure of the positioning scale device of the third embodiment of the invention while FIG. 4B is an elevation view showing the assembled structure of the positioning scale device of the third embodiment of the invention. As shown in FIG. 4A and FIG. 4B, what is the difference between the present embodiment (the third embodiment) and the previous embodiment (the second embodiment) is that the main scale body (1b) of the present embodiment has only one direction indicating portion (4). In order to facilitate the fabricating and assembling works, the rivet or thread connection is employed to connect between the main scale body (1b) and the auxiliary scale body (5b), thereby the provision of buckling portion (51) which has a multiplicity of protuberances (52) for securing the main scale body (1b) to the auxiliary scale body (5b) is not necessary. To facilitate the description and illustration of the specification and the drawings, the length's dimension graduation (12) is designed to be between 0 cm through 15 cm and preferably designed to be between 0 cm through 15 cm. The center point (21) of the stationary positioning portion (2) and the starting point of the length's dimension graduation (12) are corresponding to each other, and there is a distance of "t" between them. Besides, the center line (111) of the guiding slot (11) passes through the center point (21) of the stationary positioning portion (2).

The positioning scale device of the present embodiment also includes an angle calculating body (6) that is connected to the stationary positioning portion (2) and is provided on the auxiliary scale body (5b) and the main scale body (1b) respectively. The angle calculating body (6) being a device for displaying angle further includes a number of graduations (61) and a display window (62). The graduations (61) are uniformly distributed around the stationary positioning portion (2) and are marked on the auxiliary scale body (5b). Since the display window (62) is provided on the main scale body (1) and is on the center line of the guiding slot (11), one is capable of observing the display window (62) directly to read the inclined angle formed between the auxiliary scale body (5b) and the main scale body (1b) when a relative rotating motion (994) is performed between them. For practical purpose, in the present embodiment, some of the particular angles such as 0, 30,45, 60, 90, and 180 degrees are provided on the graduations (61) for the users' convenience where the graduations (61) of 0 and 180 degrees are marked on both side of the stationary positioning portion (2) and the center line of the second guiding slot (53). The display window (62) is designed to be in semi-circular arc in shape for displaying the angle value shown on the graduations (61). An indicator (63) is also provided to indicate the inclined angle formed by performing the relative rotating motion (994) between the auxiliary scale body (5b) and the main scale body (1b). In this way, although the inclined angle formed between them is not the particular angles as mentioned above, the user is capable of reading the inclined angle between them.

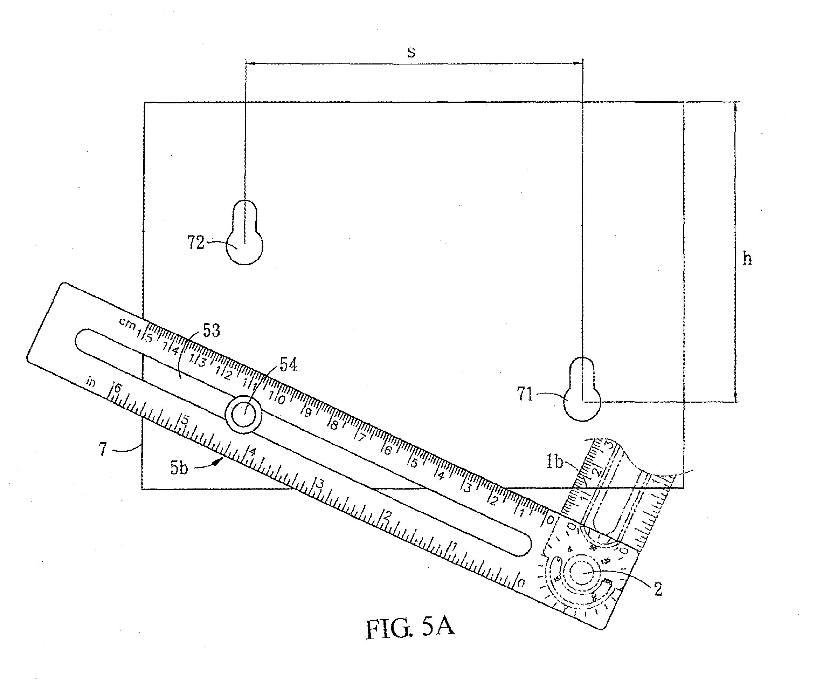

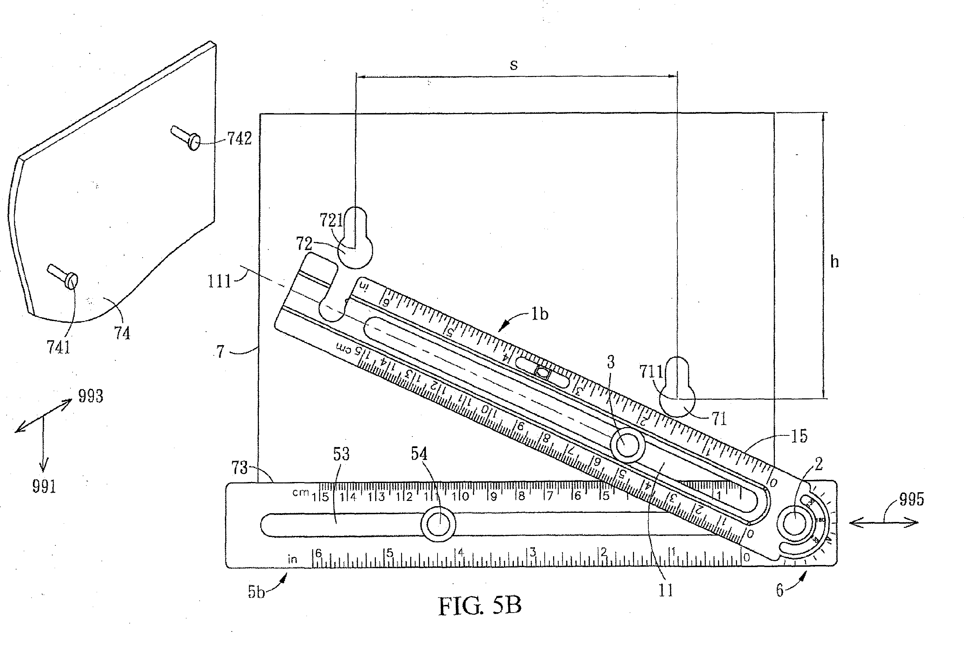

FIG. 5A is a schematic top view showing the first action of the status of using the positioning scale device to perform the duplicating and positioning work of the third embodiment of the invention. As shown in FIG. 5, in the present embodiment, when it comes to performing the positioning and securing works, the stationary positioning portion (2) is first placed on the first bearing hole (71), then the auxiliary scale body (5b) is pressed against the "object (7) to be loaded" by having the auxiliary scale body (5b) appear roughly on the extended line of the connecting line between the first bearing hole (71) and the second bearing hole (72). Afterwards, the second moving positioning portion (54) is slid along the second guiding slot (53) and then is secured at the corresponding second bearing hole (72) for assuring the perpendicular distance "s" in horizontal direction.

FIG. 5B is a schematic top view showing the second action of the status of using the positioning scale device to perform the duplicating and positioning work of the third embodiment of the invention. As shown in FIG. 5B, the auxiliary scale body (5b), which has the perpendicular distance "s" set already in horizontal direction, is pressed against the "object (7) to be loaded " on a side edge (73). Then the main scale body (1b) is pressed against the "object (7) to be loaded" by having the main scale body (1b) appear roughly on the extended line of the connecting line between the first bearing hole (71) and the second bearing hole (72). Afterwards, one observe if the first center point (711) of the first bearing hole (71) and the second center point (721) of the second bearing hole (72) are both on the center line (111) of the guiding slot (11). Certainly, one can also observes if the first center point (711) and the second center point (721) are both on a side edge (15) of the main scale body (1b) If they are not, the stationary positioning portion (2) is slid along the side edge (73) in the extended direction (995) until both the first center point (711) and the second center point (721) are on the center line (111) of the guiding slot (11) or both the first center point (711) and the second center point (721) are on a side edge (15) of the main scale body (1b). Afterwards, the stationary positioning portion (2) is secured and one is capable of reading the inclined angle between the connecting line of the first center point (711) & the second center point (721) and the horizontal direction (993) by the use of the angle calculating body (6).

Finally, after separating the positioning scale device from the "object (7) to be loaded", one has the positioning scale device press against the wall (74) and has the first positioning member (741) pass through the stationary positioning portion (2) and forms a mark or secure on the wall (74) directly. Afterwards, one assures if the direction of the guiding slot (11) is in horizontal direction (993) by the use of the direction indicating portion (4). Subsequently, one has the second positioning member (742) pass through the second moving positioning portion (54) and form a mark on the wall (74) or secure on the wall (74) directly. In the present preferred embodiment, since the first positioning member (741) and the second positioning member (742) are steel nails, one is capable of forming marks beforehand by the use of their distal portions to facilitate hanging and securing the positioning members of the other structures on the wall (74) by making use of the formed marks as centers. In this way, one can assure that the connecting line between the first positioning member (741) and the second positioning member (742) is in the horizontal direction (993). Moreover, one can also assure that the extended direction (995) is parallel to the horizontal direction (993). Moreover, if the inclined angle between the extended direction (995) and the connecting line of the first positioning member (741) and the second positioning member (742) is α while the inclined angle between the horizontal direction (993) and the connecting line of the first bearing hole (71) and the second bearing hole (72) is β, then the α angle is equal to β angle. What is more, the perpendicular distance in horizontal direction between the first positioning member (741) and the second positioning member (742) is the same as the perpendicular distance in horizontal direction between the first bearing hole (71) and the second bearing hole (72).

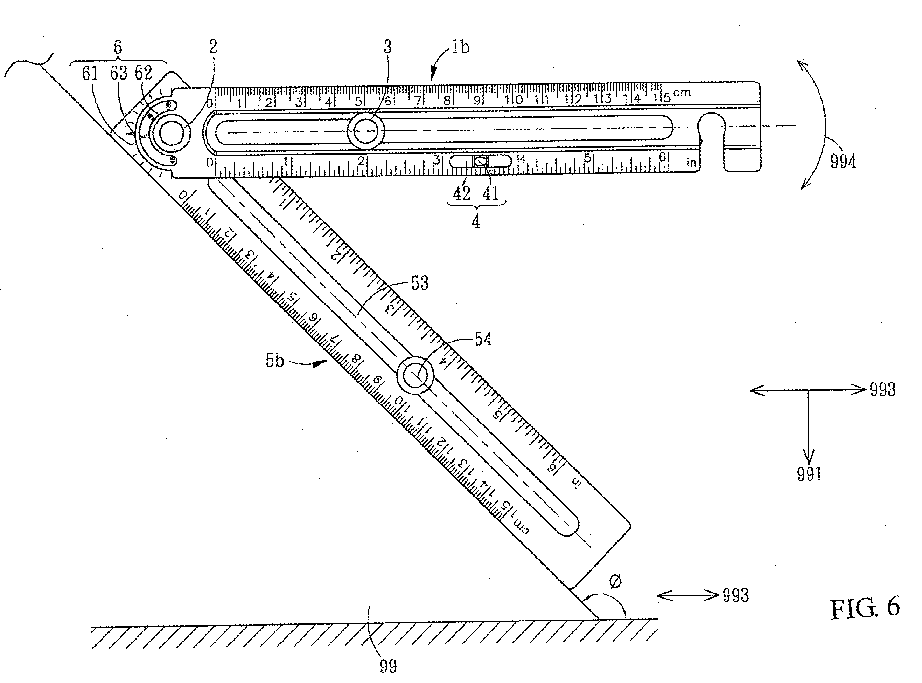

FIG. 6 is a schematic top view showing the status of using the positioning scale device to measure the inclined angle of an object to be measured of the third embodiment of the invention. As shown in FIG. 6, in the present embodiment, an "object (99) to be measured" having an inclined angle φ with respect to the horizontal direction (993) is provided. Firstly, the positioning scale device of the invention has the auxiliary scale body (5b) press against the "object (99) to be measured". Secondly, the main scale body (1b) performs a rotating motion (994) with respect to the stationary positioning portion (2) until the air bubble (41) positions at the center of the direction indicating portion (4). Finally, the stationary positioning portion (2) is secured and the value of the angle φ can be obtained by the use of the angle calculating body (6).

It will become apparent to those people skilled in the art that various modifications and variations can be made to the structure of the invention without departing from the scope or spirit of the invention. In view of the foregoing description, it is intended that all the modifications and variation fall within the scope of the following appended claims and their equivalents.

## Claims

1. A positioning scale device comprising:
(a) a main scale body (1) having at least a guiding slot (11);
(b) a stationary positioning portion (2) being positioned on the main scale body (1) and adjacent to an end of the guiding slot (11);
(c) at least a moving positioning portion (3) being positioned in the guiding slot (11) and secured at a location of the guiding slot (11); and
(d) at least a direction indicating portion (4), positioned at the main scale body (1) and formed a predetermined angle, for displaying a horizontal direction (993) which is perpendicular to a gravitational direction (991).

2. The positioning scale device as claimed in claim 1, wherein the main scale body (1) further includes a length's dimension graduation (12) for displaying the perpendicular distance in horizontal direction between the stationary positioning portion (2) and the moving positioning portion (3).

3. The positioning scale device as claimed in claim 1 further comprising an auxiliary scale body (5) connected to the stationary positioning portion (2) and capable of performing a rotating motion (994) with respect to the stationary positioning portion (2) that makes an included angle between the auxiliary scale body (5) and the main scale body (1).

4. The positioning scale device as claimed in claim 3, wherein the auxiliary scale body (5) further comprising:
(a) a second guiding slot (53); and
(b) a second moving positioning portion (54) positioned in the second guiding slot (53) and secured at a location of the second guiding slot (53).

5. The positioning scale device as claimed in claim 4, wherein the main scale body (1) further includes a guiding-and-securing slot (13) and the second moving positioning portion (54), and the second moving positioning portion (54) is capable of being positioned at a predetermined location (an end of the second guiding slot (53)) and in the guiding-and-securing slot (13) to make the main scale body (1a) overlap with the auxiliary scale body (5).

6. The positioning scale device as claimed in claim 3 further comprising an angle calculating body (6) that is connected to the stationary positioning portion (2) and is capable of displaying the value of an included angle.

7. The positioning scale device as claimed in claim 6, wherein the angle calculating body (6) further comprising:
(a) a number of graduations (61) uniformly distributed around the stationary positioning portion (2) and are marked on the auxiliary scale body (5b); and
(b) a display window (62) positioned on the main scale body (1) and is capable of observing thereat directly to read the inclined angle formed between the auxiliary scale body (5b) and the main scale body (1b) when a relative rotating motion (994) is performed between the auxiliary scale body (5) and the main scale body (1).
